# EUROPEAN PATENT APPLICATION

(11) **EP 4 224 384 A1**
(43) Date of publication of application: **09.08.2023**
(21) Application number: 21873866.4
(22) Date of filing: 07.05.2021
(51) Int. Cl.: G06Q 10/02

(54) **METHOD AND APPARATUS FOR DETERMINING RESERVATION INFORMATION**

(30) Priority: 29.09.2020 CN 202011050506
(71) Applicant: BEIJING JINGDONG TUOXIAN TECHNOLOGY CO., LTD., Beijing 100176 (CN)
(72) Inventor: GUO, Yantao, Beijing 100176 (CN)
(74) Representative: Bandpay & Greuter
(86) International application number: PCT/CN2021/092018
(87) International publication number: WO 2022/068203

(57) **Abstract**

Disclosed are a method and apparatus for determining reservation information, which relate to the technical field of computers. The method comprises: acquiring service time data of each service set by a service provider, wherein the service time data comprises a service period corresponding to each service; according to the service period of each service, determining the duration unit of the service provided by the service provider; dividing, according to the duration unit, the service time data into at least one service time unit, and storing data of each service time unit in a storage unit; and in response to receiving a service request, which is sent by a service request party, for a first service, setting, within the service period of the first service, the storage unit corresponding to each service time unit to be a read-only storage unit. The method has wide applicability.

## Description

### CROSS-REFERENCE TO RELATED APPLICATIONS

This patent application claims priority to Chinese Patent Application No. 202011050506.5 filed on September 29, 2020, and entitled "Method and Apparatus for Determining Reservation Information", which is incorporated herein by reference.

### TECHNICAL FIELD

The present disclosure relates to the field of computer technology, specifically to the field of information management technology, and in particular, to a method and apparatus for determining reservation information.

### BACKGROUND

With the acceleration of people's life, online reservation services have become services commonly used by service providers. At present, the method for determining reservation information is to reduce the number of reservations for a service provided by a service provider after the service is reserved.

However, the method for determining reservation information, which reduces the number of reservations for a service according to the reservation situation of the service, has the problems of poor applicability.

### SUMMARY

The present disclosure provides a method and apparatus for determining reservation information, an electronic device, and a computer-readable storage medium.

According to a first aspect of the disclosure, a method for determining reservation information is provided. The method includes: acquiring service time data of each service set by a service provider, where the service time data includes a service period corresponding to each service; determining, according to the service period of each service, a duration unit for the service provider to provide services; dividing the service time data into at least one service time unit according to the duration unit, and storing data of each service time unit in a storage unit; and in response to receiving a service request for a first service sent by a service requester, determining a storage unit corresponding to each service time unit within the service period of the first service as a read-only storage unit.

In some embodiments, the method for determining reservation information further includes: outputting first reservation information to the service provider, where the first reservation information includes information indicating that the service period of the first service is reserved.

In some embodiments, the method for determining reservation information further includes: for each service time unit within the service period of the first service, setting a service state of a service corresponding to the service period of the service time unit as unreservable.

In some embodiments, the determining, according to the service period of each service, a duration unit for the service provider to provide services includes: determining a greatest common divisor of the service period of each service as the duration unit for the service provider to provide services.

According to a second aspect of the disclosure, a method for determining reservation information is provided. The method includes: acquiring a service acquisition request sent by a service requester, where the service acquisition request is used to request to present each service of a service provider and a service period corresponding to each service; and in response to detecting that a storage unit corresponding to at least one service time unit in the service period of a second service among services is a read-only storage unit, presenting the second service as an unreservable service when presenting each service of the service provider and the service period corresponding to each service to the service requester. Steps of determining the service time unit comprise: acquiring each service set by the service provider and the service period of each service; determining service time data of the service provider according to the service period of each service; determining, according to the service period of each service, a duration unit for the service provider to provide services; and dividing the service time data into at least one service time unit according to the duration unit, and storing data of each service time unit in a storage unit.

In some embodiments, the method for determining reservation information further includes: n response to detecting that a storage unit corresponding to each service time unit in the service period of a third service among the services is a readable and writable storage unit, presenting the third service as a reservable service when presenting each service of the service provider and the service period corresponding to each service to the service requester.

In some embodiments, the method for determining reservation information further includes: in response to receiving a service cancellation request for a fourth service, canceling an occupation operation associated with the fourth service, The occupation operation associated with the fourth service includes: according to the received service request for the fourth service, determining that a storage unit corresponding to each service time unit within the service period of the fourth service is a read-only storage unit.

According to a third aspect of the disclosure, an apparatus for determining reservation information is provided. The apparatus includes: a first acquisition unit configured to acquire service time data of each service set by a service provider, where the service time data includes a service period corresponding to each service; a determination unit configured to determine, according to the service period of each service, a duration unit for the service provider to provide services; a division unit configured to divide the service time data into at least one service time unit according to the duration unit, and store data of each service time unit in a storage unit; and a time unit setting unit configured to determine, in response to receiving a service request for a first service sent by a service requester, a storage unit corresponding to each service time unit within the service period of the first service as a read-only storage unit.

In some embodiments, the apparatus for determining reservation information further includes: an output unit configured to output first reservation information to the service provider, where the first reservation information includes information indicating that the service period of the first service is reserved.

In some embodiments, the apparatus for determining reservation information further includes: a service state setting unit configured to, for each service time unit within the service period of the first service, set a service state of a service corresponding to the service period of the service time unit as unreservable.

In some embodiments, the determination unit includes: a determination module configured to determine a greatest common divisor of the service period of each service as the duration unit for the service provider to provide services.

According to a fourth aspect of the disclosure, an apparatus for determining reservation information is provided. The apparatus includes: a second acquisition unit configured to acquire a service acquisition request sent by a service requester, where the service acquisition request is used to request to present each service of a service provider and a service period corresponding to each service; and a first presentation unit configured to present, in response to detecting that a storage unit corresponding to at least one service time unit in the service period of a second service among services is a read-only storage unit, the second service as an unreservable service when presenting each service of the service provider and the service period corresponding to each service to the service requester. The steps of determining the service time unit comprise: acquiring each service set by the service provider and the service period of each service; determining service time data of the service provider according to the service period of each service; determining, according to the service period of each service, a duration unit for the service provider to provide services; and dividing the service time data into at least one service time unit according to the duration unit, and storing data of each service time unit in a storage unit.

In some embodiments, the apparatus for determining reservation information further includes: a second presentation unit configured to present, in response to detecting that a storage unit corresponding to each service time unit in the service period of a third service among the services is a readable and writable storage unit, the third service as a reservable service when presenting each service of the service provider and the service period corresponding to each service to the service requester.

In some embodiments, the apparatus for determining reservation information further includes: a cancellation unit configured to cancel, in response to receiving a service cancellation request for a fourth service, an occupation operation associated with the fourth service. The occupation operation associated with the fourth service includes: according to the received service request for the fourth service, determining that a storage unit corresponding to each service time unit within the service period of the fourth service is a read-only storage unit.

According to a fifth aspect of the disclosure, an electronic device is provided. The electronic device includes at least one processor; and a memory connected to the at least one processor by communication. The memory stores instructions executable by the at least one processor, and the instructions, when executed by the at least one processor, cause the at least one processor to perform the method for determining reservation information according to the first aspect or the method for determining reservation information according to the second aspect.

According to a sixth aspect of the disclosure, a computer-readable storage medium is provided. The computer-readable storage medium stores instructions executable by the at least one processor, and the instructions, when executed by the at least one processor, cause the at least one processor to perform the method for determining reservation information according to the first aspect or the method for determining reservation information according to the second aspect.

According to the method and apparatus for determining reservation information provided by the present disclosure, service time data set by a service provider and including a service period of each service is acquired, a duration unit for the service provider to provide services is determined according to the service period of each service, then the service time data is divided into at least one service time unit according to the duration unit, and when a service request for a service sent by a service requester is received, time information of each service time unit within the service period of the service in the service time data is determined as occupied, so that other services that overlap the service in time units cannot be reserved. This method has wide applicability.

The technology according to this disclosure solves the problem of poor applicability in the method for determining reservation information, which reduces the number of reservations for a service according to the reservation situation of the service.

It should be understood that the content described in this section is not intended to identify key or important features of the embodiments of the present disclosure, and is also not used to limit the scope of the present disclosure. Other features of the present disclosure will be easily understood through the following description.

### BRIEF DESCRIPTION OF THE DRAWINGS

The accompanying drawings are used for better understanding of this solution, and do not constitute a limitation to the present disclosure.
Fig. 1 is an architectural diagram of an exemplary system to which the embodiments of the present disclosure may be applied;
Fig. 2 is a flowchart of an embodiment of a method for determining reservation information according to the present disclosure;
Fig. 3 is a flowchart of another embodiment of a method for determining reservation information according to the present disclosure;
Fig. 4 is a schematic structural diagram of an embodiment of an apparatus for determining reservation information according to the present disclosure;
Fig. 5 is a schematic structural diagram of another embodiment of an apparatus for determining reservation information according to the present disclosure; and
Fig. 6 is a block diagram of an electronic device used to implement the method for determining reservation information according to the embodiments of the present disclosure.

### DETAILED DESCRIPTION OF EMBODIMENTS

Exemplary embodiments of the present disclosure are described below with reference to the accompanying drawings, which include various details of the embodiments of the present disclosure to facilitate understanding, and should be considered as exemplary only. Accordingly, those of ordinary skill in the art should recognize that various changes and modifications can be made to the embodiments described herein without departing from the scope and spirit of the present disclosure. Also, descriptions of well-known functions and constructions are omitted from the following description for clarity and conciseness.

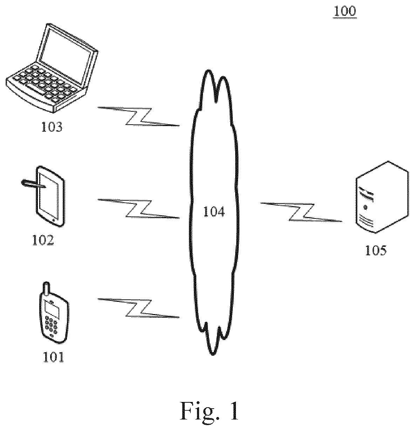

Fig. 1 illustrates an exemplary system architecture 100 to which embodiments of a method for determining reservation information or an apparatus for determining reservation information according to the present disclosure may be applied.

As shown in Fig. 1, the system architecture 100 may include a terminal device 101, 102 or 103, a network 104, and a server 105. The network 104 serves as a medium providing a communication link between the terminal device 101, 102 or 103 and the server 105. The network 104 may include various types of connections, such as wired or wireless communication links, or optical fiber cables.

A user may use the terminal device 101, 102 or 103 to interact with the server 105 through the network 104 to receive or send messages and the like. The terminal devices 101, 102 or 103 may be installed with various client applications for receiving push services, such as service reservation, consultation, shopping, chat, web, game, and financial applications.

The terminal devices 101, 102, and 103 may be various electronic devices that have a display screen and support receiving push services, including but not limited to a smart phone, a tablet computer, an e-book reader, an MP3 (Moving Picture Experts Group Audio Layer III) player, an MP4 (Moving Picture Experts Group Audio Layer IV) player, a laptop computer, a desktop computer, etc.

The terminal device 101, 102 or 103 may be hardware or software. When the terminal device 101, 102 or 103 is hardware, it may be various electronic devices, and when the terminal device 101, 102 or 103 is software, it may be installed in the electronic devices described above. The terminal device may be implemented as a plurality of software programs or software modules (for example, a plurality of software modules for providing distributed services), or as a single software program or software module. Specific limitations are not provided here.

The server 105 may acquire, from the terminal device 101, 102 or 103, service time data set by a service provider and including a service period of each service, then determine, according to the service period of each service, a duration unit for the service provider to provide services, and divide the service time data into at least one service time unit according to the duration unit. When the server 105 receives a service request of a service requester collected by the terminal device 101, 102 or 103, the server 105 may set time information of each service time unit within the service period of the service requested in the service time data as occupied.

The server 105 may acquire, from the terminal device 101, 102 or 103, a service acquisition request sent by the service requester, the service acquisition request being used to request to present each service of the service provider and a service period corresponding to each service. When detecting that a storage unit corresponding to any service time unit within the service period of a certain service among the services is a read-only storage unit, the server 105 sends corresponding information to the terminal device 101, 102 or 103. Based on the information, the terminal device 101, 102 or 103 presents that the service is an unreservable service.

It should be noted that the method for determining reservation information, provided by the embodiments of the present disclosure, is generally performed by the server 105, and accordingly, the apparatus for determining reservation information is generally configured in the server 105. The terminal device 101, 102 or 103 may be applied to collect data of the service provider, and the terminal device 101, 102 or 103 may also be applied to collect data of the service requester.

It should be understood that the numbers of the terminal devices, the network and the server in Fig. 1 are merely illustrative. Any number of terminal devices, networks and servers may be provided based on actual requirements.

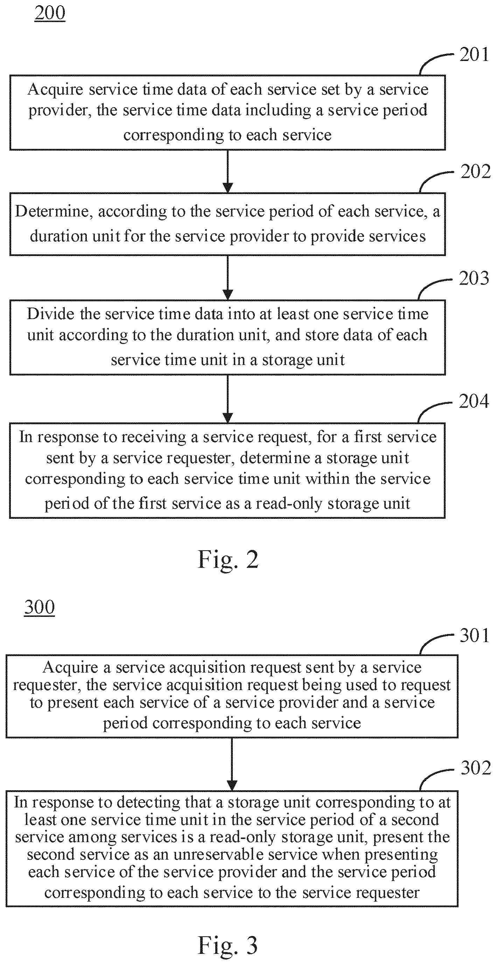

With continued reference to Fig. 2, a flow 200 of an embodiment of a method for determining reservation information according to the present disclosure is shown. The method for determining reservation information includes the following steps.

Step 201: Acquire service time data of each service set by a service provider, the service time data including a service period corresponding to each service.

In this embodiment, an executing body (for example, the server shown in Fig. 1) of the method for determining reservation information may acquire, in a wired or wireless manner, the service time data of each service set by the service provider (or an administrator of the service provider) that is collected by the terminal, the service time data including each service period corresponding to each service provided by the service provider. In this embodiment, the service provider refers to the party who provides services, may be a provider of a certain service (for example, a doctor who provides a consultation service, a driver who provides a driving service, a lawyer who provide a consulting service, etc.), and may also be a resource that provides a certain service (for example, a server that provides a storage service, a cloud computing platform that provides a computing service, a warehouse that provides an item storage service, etc.).

Step 202: Determine, according to the service period of each service, a duration unit for the service provider to provide services.

In this embodiment, the duration unit for the service provider to provide services may be determined according to the service period of each service set by the service provider. For example, if the service period of each service is in hours, that is, the service period of each service is a positive integer multiple of 1 hour, 1 hour may be determined as the duration unit for the service provider to provide services; or, if in the service period of each service, the minimum duration unit of the service period of the most accurate time is minutes, 1 minute may be determined as the duration unit for the service provider to provide services.

Step 203: Divide the service time data into at least one service time unit according to the duration unit, and store data of each service time unit in a storage unit.

In this embodiment, the service time data may be divided into a plurality of service time units by means of the duration unit, that is, the service period of each service in the service time data includes a positive integer number of service time units, and the data of each service time unit that indicates time information (for example, the data such as starting and ending time of the service time unit) is stored in each storage unit of the server. For example, if the service time data includes a service period of service A 6:00-8:00 am on January 1, 2020, a service period of service B 7:00-8:00 am on January 1, 2020, a service period of service C 7:30-8:00 am on January 1, 2020, and the duration unit is 30 minutes, then the divided service time data may be: the service period of service A includes four service time units 6:00-6:30, 6:30-7:00, 7:00-7:30 and 7:30-8:00 am on January 1, 2020, the service period of service B includes two service time units 7:00-7:30 and 7:30-8:00 am on January 1, 2020, and the service period of service C includes a service time unit 7:30-8:00 am on January 1, 2020.

Step 204: In response to receiving a service request for a first service sent by a service requester, determine a storage unit corresponding to each service time unit within the service period of the first service as a read-only storage unit.

In this embodiment, when the service request for a first service sent by the service requester is received, the read/write mode of the storage unit corresponding to each time unit included in the service period of the first service is set/adjusted to be of a read-only storage unit, that is, a storage unit in which data cannot be rewritten. It should be noted that the first service may be any service provided by the service provider.

According to the method for determining reservation information provided by the present disclosure, service time data set by a service provider and including a service period of each service is acquired, a duration unit for the service provider to provide services is determined according to the service period of each service, then the service time data is divided into at least one service time unit according to the duration unit, and when a service request for a service sent by a service requester is received, a storage unit corresponding to each service time unit within the service period of the service in the service time data is determined as a read-only storage unit, so that other services that overlap the service in time units cannot be reserved/written with information. The method may determine, in a scenario that a single service provider provides a single service, reservation information of the single service; the method may determine, in a scenario that a single service provider provides multiple services, reservation information of the multiple services, where the multiple services may or may not have conflict in service periods; the method may also determine, in a scenario that multiple service providers provide a single service, reservation information of the service; and the method may also determine, in a scenario that multiple service providers provide multiple services, reservation information of the multiple services. This method has wide applicability.

Alternatively, the method for determining reservation information further includes: outputting first reservation information to the service provider, where the first reservation information includes information indicating that the service period of the first service is reserved.

In this embodiment, after the first service request sent by the service requester is received, the information indicating that the service period of the first service is reserved or that the first service is reserved may be output to the service provider. In this embodiment, after the service or service period of a service provided by the service provider is requested by the service requester, the corresponding information is output to the service provider, so that the service provider can know relevant information in time, which provides convenience for the service provider.

Alternatively, the method for determining reservation information further includes: for each service time unit within the service period of the first service, setting a service state of a service corresponding to the service period of the service time unit as unreservable.

In this embodiment, the service state of each service corresponding to each service period of each service time unit within the service period of the first service reserved by the service requester may be set to an unreservable state. For example, the service period of the first service is 6:00-9:00 am on a certain day, including a service time unit 6:00-7:00, a service time unit 7:00-8:00, and a service time unit 8: 00-9:00; the service period of the second service is 7:00-10:00 am on the day, including a service time unit 7:00-8:00, a service time unit 8:00-9:00, and a service time unit 9:00-10:00; the service period of the third service is 8:00-11:00 am on the day, including a service time unit 8:00-9:00, a service time unit 9:00-10:00, and a service time unit 10:00-11:00; the service period of the fourth service is 6:00-7:00 am on the day, including a service time unit 6:00-7:00; then after the first service is reserved, the time unit 6:00-7:00 within the service period 6:00-9:00 of the first service also belongs to the service period 6:00-7:00 of the fourth service; the time unit 7:00-8:00 within the service period 6:00-9:00 of the first service also belongs to the service period 7:00-10:00 of the second service; the time unit 8:00-9:00 within the service period 6:00-9:00 of the first service also belongs to the service period 7:00-10:00 of the second service and the service period 8:00-11:00 of the third service; thus, the service states of the second service corresponding to the service period 7:00-10:00, the third service corresponding to the service period 8:00-11:00, and the fourth service corresponding to the service period 6:00-7:00 are all set to be unreservable.

In this embodiment, the service state of each service to which the service time unit included in the service period of the reserved service belongs is set as unreservable, the service state of the service whose service period overlaps/conflicts the service period of the reserved service may be set as unreservable, and after a service of the service provider is reserved, the reservation states of other services whose service periods overlap with the service period of the service can be updated, which can determine reservation information of multiple services in a multi-service reservation scenario.

In some optional implementation manners of the embodiment described above in conjunction with Fig. 2, determining, according to the service period of each service, a duration unit for the service provider to provide services includes: determining a greatest common divisor of the service period of each service as the duration unit for the service provider to provide services.

In this embodiment, the duration unit for the service provider to provide services may be the greatest common divisor of the service period of each service provided by the service provider. For example, the service provider provides three services, namely service A, service B, and service C. The service period of service A is 1:15-1:45 pm on a certain day, the service period of service B is 1:30-2:45 pm on the day, and the service period of service C is 3:00-4:00 pm on the day. Then 15 minutes may be determined as the duration unit for the service provider to provide services. For another example, the service provider provides three services, namely service D, service E, and service F. The service period of service D is 1:20-1:50 pm on a certain day, the service period of service E is 1:35-2:45 pm on the day, and the service period of service F is 3:00-4:00 pm on the day. Then because the three periods 1:20-1:45, 1:35-2:45, and 3:00-4:00 may all be composed of a positive integer number of time units in the same time axis composed of time units every 5 minutes (one time unit is 5 minutes). Therefore, the duration time for the service provider who provides service D, service E, and service F to provide services is 5 minutes.

In this embodiment, the greatest common divisor of the service period of each service provided by the service provider is used as the service time unit for the service provider to provide services, which can ensure that the service period of each service can be divided into service time units and reduce the number of divided service time units, thereby improving the computing efficiency of the system.

With further reference to Fig. 3, a flow 300 of another embodiment of a method for determining reservation information according to the present disclosure is shown. The method for determining reservation information includes the following steps.

Step 301: Acquire a service acquisition request sent by a service requester, the service acquisition request being used to request to present each service of a service provider and a service period corresponding to each service.

In this embodiment, an executing body (for example, the server shown in Fig. 1) of the method for determining reservation information may acquire, in a wired or wireless manner, the service acquisition request of the service requester that is collected by the terminal, the service acquisition request being used to request to present each service provided by the service provider and the service period corresponding to each service.

Step 302: In response to detecting that the storage unit corresponding to at least one service time unit in the service period of a second service among the services is a read-only storage unit, present the second service as an unreservable service when presenting each service of the service provider and the service period corresponding to each service to the service requester. The steps of determining service time units include: acquiring each service set by the service provider and the service period of each service; determining service time data of the service provider according to the service period of each service; determining, according to the service period of each service, a duration unit for the service provider to provide services; and dividing the service time data into at least one service time unit according to the duration unit.

In this embodiment, when it is detected that, among the time units included in the service period of any of the services provided by the service provider, there is a time unit whose corresponding storage unit is a read-only storage unit, the service is presented as an unreservable service when each service provided by the service provider and the service period of each service are presented to the service requester. It should be noted that the second service may be any of the services provided by the service provider.

In this embodiment, the service time units may be determined according to the following steps: acquiring service time data of each service set by the service provider, the service time data including each service period corresponding to each service provided by the service provider; determining, according to the service period of each service set by the service provider, a duration unit for the service provider to provide services; and dividing the service time data into a plurality of service time units by means of the duration unit, that is, the service period of each service in the service time data includes a positive integer number of service time units.

According to the method for determining reservation information provided by this embodiment, a service acquisition request, sent by a service requester, for requesting to present each service of a service provider and a service period corresponding to each service is acquired, and when it is detected that the service period of a certain service among the services includes a service time unit of which the time information is occupied, this service is presented as an unreservable service, which can realize that, after a service is reserved, the reservation information of the service whose service period overlaps/conflicts the service period of the reserved service is updated in time, thereby realizing linkage update of the reservation states.

Alternatively, the method for determining reservation information further includes: in response to detecting that a storage unit corresponding to each service time unit in the service period of a third service among the services is a readable and writable storage unit, presenting the third service as a reservable service when presenting each service of the service provider and the service period corresponding to each service to the service requester.

In this embodiment, when it is detected that the storage unit corresponding to each service time unit in the service period of a certain service among the services provided by the service provider is a readable and writable storage unit, the service is presented as a reservable service when each service and the service period of each service are presented to the service requester. In this embodiment, the reservation state of a service is determined by detecting the time information of each service time unit included in the service period of the service, which can prevent the reservation states of two services whose service names are the same but whose service periods do not overlap from affecting each other, and can prevent the reservation states of two services whose service names are different but whose service periods overlap from failing in linkage update. Therefore, this reservation method has wider applicability.

Alternatively, the method for determining reservation information further includes: in response to receiving a service cancellation request for a fourth service, canceling an occupation operation associated with the fourth service. The occupation operation associated with the fourth service includes: according to the received service request for the fourth service, determining that a storage unit corresponding to each service time unit within the service period of the fourth service is a read-only storage unit.

In this embodiment, when a cancellation request for canceling a certain service is received from the service requester, storage units corresponding to all the service time units in the service period of the service are set as readable and writable storage units when the service is reserved. It should be noted that the fourth service may be any of the services. In this embodiment, after the service requester cancels the reservation of a certain service, the storage units corresponding to the service time units included in the service period of the service can be cancelled and set as readable and writable storage units, so that any service whose service period overlaps the service period of this service is updated to a reservable state, which realizes linkage update of the reservation states of multiple services.

In some optional implementation manners of the embodiment described above in conjunction with Fig. 3, when multiple service requesters operating the same service is received, the requester who requests first is allowed to operate by a read and write authority control method or the like according to the receiving time of the requests sent by the multiple requesters, that is, the operation authority of the service is granted to the requester who requests first, so as to avoid operation conflicts and the like caused by multiple parties operating the same service at the same time.

In some application scenarios, the service provider may be a doctor who provides consultation services, and each service provided by the service provider may be a telephone consultation service (30 minutes) or a video consultation service (45 minutes). First, service time data set by the doctor on June 22, 2020 is acquired: telephone consultation service 1 and service period 9:00-9:30, telephone consultation service 2 and service period 11:00-11:30, video consultation service 3 and service period 9:00-9:45, video consultation service 4 and service period 10:00-10:45, and video consultation service 5 and service period 11:15-12:00.

Second, according to the service periods of the above five services set by the doctor, it is determined that a duration unit for the doctor to provide services is 15 minutes. The doctor's service time data may be divided into a plurality of service time units according to the duration unit, and it can be known that the telephone consultation service 1 includes a service time unit 9:00-9:15 and a service time unit 9:15-9:30, the telephone consultation service 2 includes a service time unit 11:00-11:15 and a service time unit 11:15-11:30, the video consultation service 3 includes a service time unit 9:00-9:15, a service time unit 9:15-9:30 and a service time unit 9:30-9:45, the video consultation service 4 includes a service time unit 10:00-10:15, a service time unit 10:15-10:30 and a service time unit 10:30-10:45, the video consultation service 5 includes a service time unit 11:15-11:30, a service time unit 11:30-11:45 and a service time unit 11:45-12:00. It can be understood that the telephone consultation service 1 and the video consultation service 3 have the same service time units, and the telephone consultation service 2 and the video consultation service 5 have the same duration unit, (that is, the two overlap/conflict in service time), so after one of the services is reserved, the reservation of the other service will be affected.

Then, unit information of the service time units is generated, that is, each service time unit is stored correspondingly with the service to which the service time unit belongs or the service period of the service, for example: the unit information of the service time unit 9:00-9:15 may be {unit ID/service ID, doctor ID, 9:00 (start time of service period of telephone consultation 1), 9:30 (end time of service period of telephone consultation 1)} and {unit ID/service ID, doctor ID, 9:00 (start time of service period of video consultation service 3), 9:45 (end time of service period of video consultation service 3)}, the unit information of the service time unit 9:15-9:30 may be {unit ID, doctor ID, 9:00, 9:30} and {unit ID/service ID, doctor ID, 9:00, 9:45}, and the unit information of the service time unit 9:30-9:45 may be {unit ID, doctor ID, 9:00, 9:45}. After the unit information of each service time unit is generated, the unit information is stored in a database.

After a service provided by a doctor is reserved, a corresponding service time unit can be determined according to the service ID of the service or the start-end time of the service period of the service, and time information of the corresponding service time unit is set as occupied.

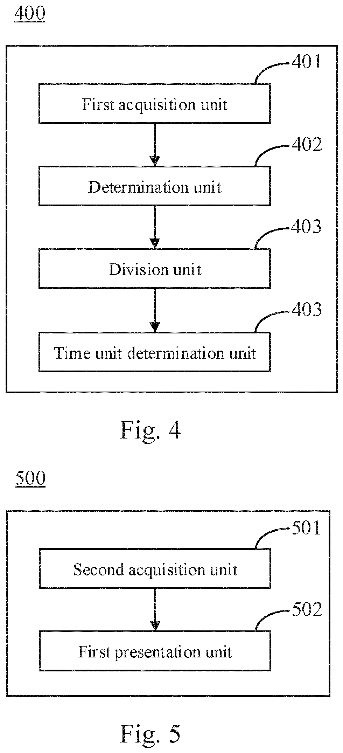

With further reference to Fig. 4, as an implementation of the methods shown in the above figures, the present disclosure provides an embodiment of an apparatus for determining reservation information. The embodiment of the apparatus corresponds to the embodiment of the method shown in Fig. 2, and the apparatus may be applied to various electronic devices.

As shown in Fig. 4, the apparatus 400 for determining reservation information in this embodiment includes: a first acquisition unit 401, a determination unit 402, a division unit 403, and a time unit setting unit 404. The first acquisition unit is configured to acquire service time data of each service set by a service provider, the service time data including a service period corresponding to each service; the determination unit is configured to determine, according to the service period of each service, a duration unit for the service provider to provide services; the division unit is configured to divide the service time data into at least one service time unit according to the duration unit, and store data of each service time unit in a storage unit; and the time unit setting unit is configured to, in response to receiving a service request for a first service sent by a service requester, determine a storage unit corresponding to each service time unit within the service period of the first service as a read-only storage unit.

In some embodiments, the apparatus for determining reservation information further includes: an output unit configured to output first reservation information to the service provider, where the first reservation information includes information indicating that the service period of the first service is reserved.

In some embodiments, the apparatus for determining reservation information further includes: a service state setting unit configured to, for each service time unit within the service period of the first service, set a service state of the service corresponding to the service period of the service time unit as unreservable.

In some embodiments, the determination unit includes: a determination module configured to determine a greatest common divisor of the service period of each service as the duration unit for the service provider to provide services.

The units in the above-mentioned apparatus 400 correspond to the steps in the method described with reference to Fig. 2. Therefore, the operations, features and achievable technical effects described above with respect to the method for determining reservation information are also applicable to the apparatus 400 and the units included therein, and details are not described herein again.

With further reference to Fig. 5, as an implementation of the methods shown in the above figures, the present disclosure provides an embodiment of an apparatus for determining reservation information. The embodiment of the apparatus corresponds to the embodiment of the method shown in Fig. 3, and the apparatus may be applied to various electronic devices.

As shown in Fig. 5, the apparatus 500 for pushing information in this embodiment includes: a second acquisition unit 501 and a first presentation unit 502. The second acquisition unit is configured to acquire a service acquisition request sent by a service requester, the service acquisition request being used to request to present each service of a service provider and a service period corresponding to each service; and the first presentation unit is configured to present, in response to detecting that a storage unit corresponding to at least one service time unit in the service period of a second service among the services is a read-only storage unit, the second service as an unreservable service when presenting each service of the service provider and the service period corresponding to each service to the service requester. The steps of determining the service time unit include: acquiring each service set by the service provider and the service period of each service; determining service time data of the service provider according to the service period of each service; determining, according to the service period of each service, a duration unit for the service provider to provide services; and dividing the service time data into at least one service time unit according to the duration unit.

In some embodiments, the apparatus for determining reservation information further includes: a second presentation unit configured to present, in response to detecting that a storage unit corresponding to each service time unit in the service period of a third service among the services is a readable and writable storage unit, the third service as a reservable service when presenting each service of the service provider and the service period corresponding to each service to the service requester.

In some embodiments, the apparatus for determining reservation information further includes: a cancellation unit configured to cancel, in response to receiving a service cancellation request for a fourth service, an occupation operation associated with the fourth service. The occupation operation associated with the fourth service includes: according to the received service request for the fourth service, determining that the storage unit corresponding to each service time unit within the service period of the fourth service is a read-only storage unit.

The units in the above-mentioned apparatus 500 correspond to the steps in the method described with reference to Fig. 3. Therefore, the operations, features and achievable technical effects described above with respect to the method for determining reservation information are also applicable to the apparatus 500 and the units included therein, and details are not described herein again.

According to the embodiments of the present disclosure, the present disclosure further provides an electronic device and a readable storage medium.

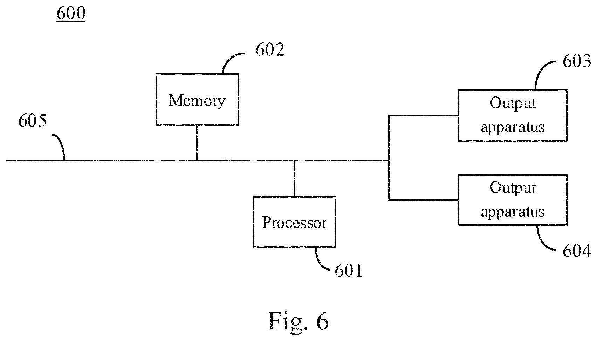

Fig. 6 shows a block diagram of an electronic device 600 for a method for determining reservation information according to the embodiments of the present disclosure. The electronic device is intended to represent various forms of digital computers, such as a laptop, a desktop, a worktable, a personal digital assistant, a server, a blade server, a mainframe computer, and other suitable computers. The electronic device may also represent various forms of mobile devices, such as a personal digital assistant, a cellular phone, a smart phone, a wearable device, and other similar computing devices. For components shown herein, their connections and relationships, and their functions are by way of example only, and are not intended to limit implementations of the present disclosure described and/or claimed herein.

As shown in Fig. 6, the electronic device includes: one or more processors 601, a memory 602, and interfaces for connecting various components, including high-speed interfaces and low-speed interfaces. The various components are interconnected by different buses and may be installed on a common motherboard or installed otherwise as required. The processor may process instructions executed within the electronic device, including instructions stored in or on a memory to display graphical information of GUI on an external input/output apparatus (e.g. a display device coupled to the interface). In other embodiments, a plurality of processors and/or a plurality of buses may be used with a plurality of memories and a plurality of memories, if necessary. Likewise, a plurality of electronic devices may be connected, each providing some necessary operations (e.g., as a server array, a group of blade servers, or a multiprocessor system). In Fig. 6, one processor 601 is used as an example.

The memory 602 is a non-transitory computer-readable storage medium provided by the present disclosure. The memory stores instructions executable by at least one processor, so that the at least one processor performs the method for determining reservation information provided by the present disclosure. The non-transitory computer-readable storage medium of the present disclosure stores computer instructions, and the computer instructions are used to cause a computer to perform the method for determining reservation information provided by the present disclosure.

As a non-transitory computer-readable storage medium, the memory 602 may be used to store non-transitory software programs, non-transitory computerexecutable programs and modules, such as program instructions/modules corresponding to the method for determining reservation information in the embodiments of the present disclosure (for example, the first acquisition unit 401, the determination unit 402, the division unit 403, and the time unit setting unit 404 shown in Fig. 4). The processor 601 runs the non-transitory software programs, instructions and modules stored in the memory 602 to execute various functional applications and data processing of the server, that is, to implement the method for determining reservation information in the above method embodiments.

The memory 602 may include a storage program area and a storage data area. The storage program area may store an operating system, and an application program required for at least one function. The storage data area may store data created according to the use of the electronic device for determining reservation information, etc. In addition, the memory 602 may include a high-speed random access memory, and may further include a non-transitory memory, such as at least one magnetic disk storage device, flash memory device, or other non-transitory solidstate storage device. In some embodiments, the memory 602 may alternatively include memories arranged remotely from the processor 601, and these remote memories may be connected to the electronic device for determining reservation information through a network. Examples of the network include, but are not limited to, the Internet, an intranet, a local area network, a mobile communications network, or a combination thereof.

The electronic device for the method for determining reservation information may further include an input apparatus 603, an output apparatus 604 and a bus 605. The processor 601, the memory 602, the input apparatus 603 and the output apparatus 604 may be connected by a bus 605 or other means, exemplified by a bus 605 in Fig. 6.

The input apparatus 603 may receive input numeric or character information, and generate key signal input related to user settings and function control of the electronic device for determining reservation information, such as a touch screen, a keypad, a mouse, a trackpad, a touchpad, an indicating arm, one or more mouse buttons, a trackball, a joystick, and other input apparatuses. The output apparatus 604 may include a display device, an auxiliary lighting apparatus (e.g., LED), a tactile feedback apparatus (e.g., a vibration motor), etc. The display device may include, but is not limited to, a liquid crystal display (LCD), a light emitting diode (LED) display, and a plasma display. In some implementation manners, the display device may be a touch screen.

Various embodiments of the systems and technologies described herein may be implemented in digital electronic circuit systems, integrated circuit systems, dedicated ASICs (application specific integrated circuits), computer hardware, firmware, software, and/or combinations thereof. These various embodiments may include: being implemented in one or more computer programs that can be executed and/or interpreted on a programmable system that includes at least one programmable processor. The programmable processor may be a dedicated or general-purpose programmable processor, and may receive data and instructions from a storage system, at least one input apparatus, and at least one output apparatus, and transmit the data and instructions to the storage system, the at least one input apparatus, and the at least one output apparatus.

These computing programs (also referred to as programs, software, software applications, or codes) include machine instructions of the programmable processor and may use high-level processes and/or object-oriented programming languages, and/or assembly/machine languages to implement these computing programs. As used herein, the terms "machine readable medium" and "computer readable medium" refer to any computer program product, device, and/or apparatus (for example, magnetic disk, optical disk, memory, programmable logic apparatus (PLD)) used to provide machine instructions and/or data to the programmable processor, including machine readable medium that receives machine instructions as machine readable signals. The term "machine readable signal" refers to any signal used to provide machine instructions and/or data to the programmable processor.

In order to provide interaction with a user, the systems and technologies described herein may be implemented on a computer, the computer has: a display apparatus for displaying information to the user (for example, CRT (cathode ray tube) or LCD (liquid crystal display) monitor); and a keyboard and a pointing apparatus (for example, mouse or trackball), and the user may use the keyboard and the pointing apparatus to provide input to the computer. Other types of apparatuses may also be used to provide interaction with the user; for example, feedback provided to the user may be any form of sensory feedback (for example, visual feedback, auditory feedback, or tactile feedback); and any form (including acoustic input, voice input, or tactile input) may be used to receive input from the user.

The systems and technologies described herein may be implemented in a computing system that includes backend components (e.g., as a data server), or a computing system that includes middleware components (e.g., application server), or a computing system that includes frontend components (for example, a user computer having a graphical user interface or a web browser, through which the user may interact with the implementations of the systems and the technologies described herein), or a computing system that includes any combination of such backend components, middleware components, or frontend components. The components of the system may be interconnected by any form or medium of digital data communication (e.g., communication network). Examples of the communication network include: local area networks (LAN), wide area networks (WAN), the Internet, and blockchain networks.

The computer system may include a client and a server. The client and the server are generally far from each other and usually interact through the communication network. The relationship between the client and the server is generated by computer programs that run on the corresponding computer and have a client-server relationship with each other.

It should be understood that the various forms of processes shown above may be used to reorder, add, or delete steps. For example, the steps described in the present disclosure may be performed in parallel, sequentially, or in different orders. As long as the desired results of the technical solution disclosed in the present disclosure can be achieved, no limitation is made herein.

The above specific embodiments do not constitute limitation on the protection scope of the present disclosure. Those skilled in the art should understand that various modifications, combinations, sub-combinations and substitutions may be made according to design requirements and other factors. Any modification, equivalent replacement and improvement made within the spirit and principle of the present disclosure shall be included in the protection scope of the present disclosure.

## Claims

1. A method for determining reservation information, comprising:
acquiring service time data of each service set by a service provider, wherein the service time data comprises a service period corresponding to each service;
determining, according to the service period of each service, a duration unit for the service provider to provide services;
dividing the service time data into at least one service time unit according to the duration unit, and storing data of each service time unit in a storage unit; and
in response to receiving a service request for a first service sent by a service requester, determining a storage unit corresponding to each service time unit within the service period of the first service as a read-only storage unit.

2. The method according to claim 1, wherein the method further comprises:
outputting first reservation information to the service provider, wherein the first reservation information comprises information indicating that the service period of the first service is reserved.

3. The method according to any one of claims 1-2, wherein the method further comprises:
for each service time unit within the service period of the first service, setting a service state of a service corresponding to the service period of the service time unit as unreservable.

4. The method according to any one of claims 1-3, wherein the determining, according to the service period of each service, a duration unit for the service provider to provide services comprises:
determining a greatest common divisor of the service period of each service as the duration unit for the service provider to provide services.

5. A method for determining reservation information, comprising:
acquiring a service acquisition request sent by a service requester, wherein the service acquisition request is used to request to present each service of a service provider and a service period corresponding to each service; and
in response to detecting that a storage unit corresponding to at least one service time unit in the service period of a second service among services is a read-only storage unit, presenting the second service as an unreservable service when presenting each service of the service provider and the service period corresponding to each service to the service requester,
wherein steps of determining the service time unit comprise: acquiring each service set by the service provider and the service period of each service; determining service time data of the service provider according to the service period of each service; determining, according to the service period of each service, a duration unit for the service provider to provide services; and dividing the service time data into at least one service time unit according to the duration unit, and storing data of each service time unit in a storage unit.

6. The method according to claim 5, wherein the method further comprises:
in response to detecting that a storage unit corresponding to each service time unit in the service period of a third service among the services is a readable and writable storage unit, presenting the third service as a reservable service when presenting each service of the service provider and the service period corresponding to each service to the service requester.

7. The method according to any one of claims 5-6, wherein the method further comprises:
in response to receiving a service cancellation request for a fourth service, canceling an occupation operation associated with the fourth service,
wherein the occupation operation associated with the fourth service comprises: according to the received service request for the fourth service, determining that a storage unit corresponding to each service time unit within the service period of the fourth service is a read-only storage unit.

8. An apparatus for determining reservation information, comprising:
a first acquisition unit configured to acquire service time data of each service set by a service provider, wherein the service time data comprises a service period corresponding to each service;
a determination unit configured to determine, according to the service period of each service, a duration unit for the service provider to provide services;
a division unit configured to divide the service time data into at least one service time unit according to the duration unit, and store data of each service time unit in a storage unit; and
a time unit setting unit configured to determine, in response to receiving a service request for a first service sent by a service requester, a storage unit corresponding to each service time unit within the service period of the first service as a read-only storage unit.

9. The apparatus according to claim 8, wherein the apparatus further comprises:
an output unit configured to output first reservation information to the service provider, wherein the first reservation information comprises information indicating that the service period of the first service is reserved.

10. The apparatus according to any one of claims 8 and 9, wherein the apparatus further comprises:
a service state setting unit configured to, for each service time unit within the service period of the first service, set a service state of a service corresponding to the service period of the service time unit as unreservable.

11. The apparatus according to any one of claims 8-10, wherein the determination unit comprises:
a determination module configured to determine a greatest common divisor of the service period of each service as the duration unit for the service provider to provide services.

12. An apparatus for determining reservation information, comprising:
a second acquisition unit configured to acquire a service acquisition request sent by a service requester, wherein the service acquisition request is used to request to present each service of a service provider and a service period corresponding to each service; and
a first presentation unit configured to present, in response to detecting that a storage unit corresponding to at least one service time unit in the service period of a second service among services is a read-only storage unit, the second service as an unreservable service when presenting each service of the service provider and the service period corresponding to each service to the service requester,
wherein the steps of determining the service time unit comprise: acquiring each service set by the service provider and the service period of each service; determining service time data of the service provider according to the service period of each service; determining, according to the service period of each service, a duration unit for the service provider to provide services; and dividing the service time data into at least one service time unit according to the duration unit, and storing data of each service time unit in a storage unit.

13. The apparatus according to claim 12, wherein the apparatus further comprises:
a second presentation unit configured to present, in response to detecting that a storage unit corresponding to each service time unit in the service period of a third service among the services is a readable and writable storage unit, the third service as a reservable service when presenting each service of the service provider and the service period corresponding to each service to the service requester.

14. The apparatus according to any one of claims 12 and 13, wherein the apparatus further comprises:
a cancellation unit configured to cancel, in response to receiving a service cancellation request for a fourth service, an occupation operation associated with the fourth service,
wherein the occupation operation associated with the fourth service comprises: according to the received service request for the fourth service, determining that a storage unit corresponding to each service time unit within the service period of the fourth service is a read-only storage unit.

15. An electronic device, comprising:
at least one processor; and
a memory connected to the at least one processor by communication,
wherein the memory stores instructions executable by the at least one processor, and the instructions, when executed by the at least one processor, cause the at least one processor to perform the method according to any one of claims 1-7.

16. A non-transitory computer-readable storage medium storing computer instructions, wherein the computer instructions are used to cause a computer to perform the method according to any one of claims 1-7.
